# EUROPEAN PATENT SPECIFICATION

(11) **EP 4 376 395 B1**
(45) Date of publication and mention of the grant of the patent: **18.11.2026**
(21) Application number: 24169060.1
(22) Date of filing: 28.09.2017
(51) Int. Cl.: G06F 3/048, G06F 3/0482, G06F 3/04886, H04M 1/72469

(54) **UNIFIED AND SMART NOTIFICATIONS AND QUICK SETTINGS SYSTEM**
VEREINHEITLICHTES UND INTELLIGENTES BENACHRICHTIGUNGSSYSTEM UND SCHNELLEINSTELLUNGSSYSTEM
NOTIFICATIONS UNIFIÉES ET INTELLIGENTES ET SYSTÈME DE RÉGLAGES RAPIDES

(30) Priority: 16.12.2016 US 201615381276
(43) Date of publication of application: 29.05.2024
(62) Document number(s) of the earlier application(s) in accordance with Art. 76 EPC: 21153277.5 / 3 828 681; 17787289.2 / 3 555 734
(73) Proprietor: Google LLC, Mountain View, CA 94043 (US)
(72) Inventor: KUSCHER, Alexander Friedrich, Mountain View, 94043 (US); GABRIEL, Sebastien Vincent, Mountain View, 94043 (US); CHEN, Jennifer, Mountain View, 94043 (US)
(74) Representative: Collingwood-Pierce, Alexandra Isobel Seymour

(56) References cited:
- US-A1- 2008 126 958
- US-A1- 2010 115 033
- GUPTA INFORMATION SYSTEMS IN ENGLISH: "Android Nougat 7.0 Tips and Tricks - How to configure app notification in Android N", 14 June 2016 (2016-06-14), XP093172595, Retrieved from the Internet <URL:https://www.youtube.com/watch?v=Dhuta8Qs5jE>
- LI TIANSHI TIANSHIL@CS CMU EDUTIANSHIL@CS CMU EDU ET AL: "Alert Now or Never: Understanding and Predicting Notification Preferences of Smartphone Users", ACM TRANSACTIONS ON COMPUTER-HUMAN INTERACTION, ACM, NEW YORK, NY, US, 1 January 1990 (1990-01-01), XP058681822, ISSN: 1073-0516, DOI: 10.1145/3478868
- ANDROID FORUMS: "Galaxy S8: How to set up Do Not Disturb", 12 May 2017 (2017-05-12), XP093281949, Retrieved from the Internet <URL:https://www.youtube.com/watch?v=ih4--cc0fMk> [retrieved on 20250528]
- BRETT IN TECH: "Do Not Disturb Mode on Android", 18 January 2017 (2017-01-18), XP093281948, Retrieved from the Internet <URL:https://www.youtube.com/watch?v=Jfr7AgZVWuo> [retrieved on 20250528]

## Description

### BACKGROUND

Conventional laptops, tablets, and similar personal electronic devices incorporate a user interface (UI) that presents information to the user in a particular manner. For instance, tabs, drop-down menus, icons and other elements may be presented in a certain location or with a specific appearance for a given application. However, in some instances always providing the same information in the same way may be inefficient depending on a user's preferences or their current activities.

Gupta Information Systems in English, "Android Nougat 7.0 Tips and Tricks - How to configure app notification in Android N", 14 June 2016, URL:https://www.youtube.com/watch?v=Dhuta8Qs5jE, describes how the notification settings of applications can be changed on the Android N device. There are 6 levels of notification controls starting from no notification to full notification.

### BRIEF SUMMARY

Aspects of the disclosure provide a UI platform that combines user notifications and various operational settings in a single display region, such as a sidebar, to make it convenient for a user to quickly see the information and to manage it. The setting-related information, including system icons for user logins, network info, etc., may be located along the bottom portion of the sidebar, while application-related notifications such as sticky notification icons, hangout icons, etc., are located along another, upper portion of the sidebar. This type of operation is helpful for the user and can improve performance of the device because it provides efficient access to active applications and programs, streamlining management of the system. This can save time and application resources.

In accordance with aspects of the disclosure, a method for configuring a user interface in a user device according to claim 1 is provided. Further aspects are provided in the dependent claims.

In accordance with preferred aspects of the disclosure, a user device according to claim 14 is provided.

### BRIEF DESCRIPTION OF THE DRAWINGS

Figs. 1A-B illustrate example user devices with user interfaces according to aspects of the disclosure.
Fig. 2 is an example block diagram of a user device according to aspects of the disclosure.
Fig. 3 illustrates an example network with different user devices according to aspects of the disclosure.
Figs. 4A-C illustrate a first use case in accordance with aspects of the technology.
Figs. 5A-C illustrate a second use case in accordance with aspects of the technology.
Figs. 6A-B illustrate a third use case in accordance with aspects of the technology.
Figs. 7A-F illustrate various UI arrangements in accordance with aspects of the technology.
Figs. 8A-B illustrate another use case in accordance with aspects of the technology.
Figs. 9A-C illustrate various examples of different settings presented in the UI.
Figs. 10A-B illustrate variations of the UI as presented on a user device in accordance with aspects of the technology.
Fig. 11 is a flow diagram of an example method according to aspects of the disclosure.

### DETAILED DESCRIPTION

### OVERVIEW

The technology relates to an improved user interface for provision of, for example, user notifications and application setting, on a display of a user device, such as a laptop, tablet, netbook, mobile phone, PDA or other type of user device. A shared region of the display, such as a sidebar, is configured to provide a dynamic arrangement of various notifications and settings that can relate to current applications and activities. The user notifications are arranged along one portion of the UI while the settings are arranged along another portion of the UI. In one scenario, while the notification and setting portions do not overlap, their relative size and appearance may change depending on what applications are currently active and what information contained within the UI.

As discussed in detail below, this arrangement is flexible to accommodate content based on different priority levels. In one arrangement, the freshest or most recent notifications may be provided along a top section of the sidebar. There may be a lot of notifications for various applications including mail, hangouts, social media and calendar applications, to name a few. The notifications may be in the form of persistent or sticky notes that exist while a particular application is running, such as a music application. In this case, once the application is closed, the notification may be removed from the list.

The system is able to auto collapse (or expand) the list when a new notification is received. The collapsing may be an accordion-type effect, indicating to the user that a change has been made to the list. Also, a "do not disturb" mode can be applied to some or all of the notifications, for instance so that audible, visual and/or vibrating feedback is suppressed. This mode may include "total silence" and "priority" options, allowing the user to further customize presentation of the content on the UI.

The quick settings, for instance along a bottom region of a sidebar, may be provided in a condensed or collapsed summary arrangement or in a more detailed advanced mode where particular settings are expanded. According to one aspect of the technology, a given setting may still be accessible by the user while in the collapsed state. In the summary-type mode, the settings portion of the UI shrinks/collapses to a core group of settings visible and accessible to the user. For instance, the core settings may be presented as a single row of icons that allow the user to access an account login, Wifi and Bluetooth^{™} settings, as well as audio, power, display and/or other setting options. As with the notifications, the settings may auto collapse (or expand) depending on current activity, such as upon receipt of a new notification.

These features can be implemented in a variety of use cases. Such use cases and other operational aspects are discussed in detail below. Before that, some example system configurations are presented.

### EXAMPLE SYSTEMS

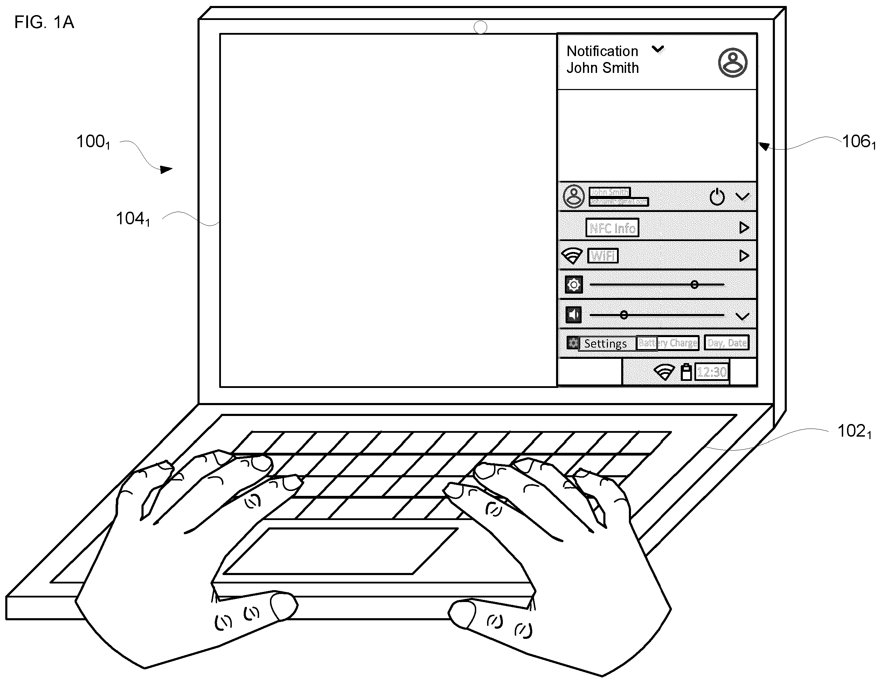

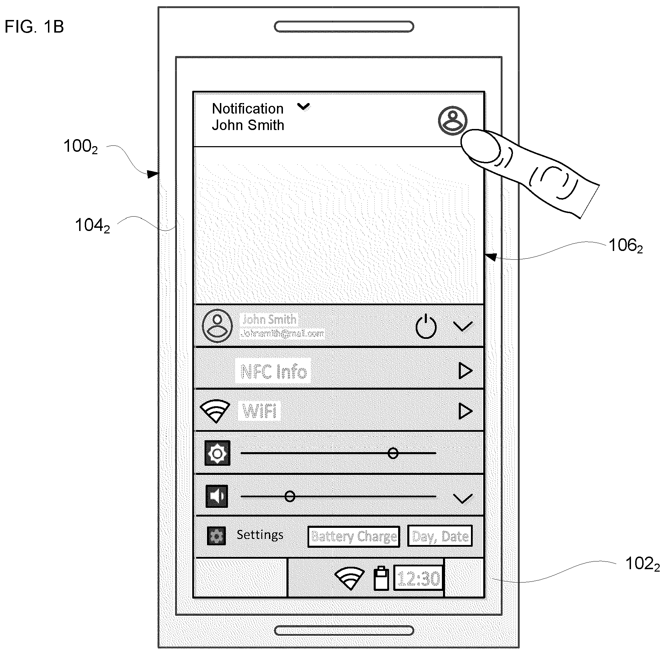

Fig. 1A illustrates an example laptop-style user device 100₁ and Fig. 1B illustrates an example PDA or smart phone type user device 100₂ that can incorporate the user interface technology described herein. As shown in Fig. 1A, the user device 100₁ includes a user input section 102₁ and a display section 104₁. In this device, the user input and display sections may be moveable relative to and/or separable from one another. In contrast, as shown in Fig. 1B the user input section 102₂ and the display section 104₂ may be part of a single housing element.

In either configuration, user interface 106₁ or 106₂ is generated for presentation on a display screen. By way of example, the display screen may be a TFT LCD (Thin-Film-Transistor Liquid Crystal Display) or OLED (Organic Light Emitting Diode) display. The user interface 106₁ may be positioned along a right side (e.g., a "right rail") of the display screen, while the user interface 106₂ may be arranged to encompass all or substantially all of the display screen. With either type of device, other locations and configurations for the user interface are possible. For instance, the user interface 106₁ may be positioned along a left side ("left rail") of the display screen, or extending lengthwise across an upper or lower region of the display screen.

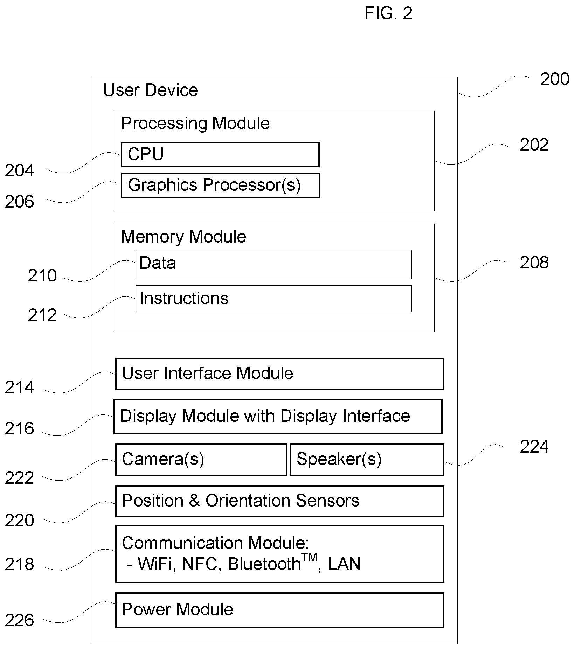

The block diagram 200 of Fig. 2 illustrates components common to the user devices of Figs. 1A and 1B. For instance, processing module 202 includes a CPU 204 and one or more graphics processors 206, and memory module 208 is configured to store data 210 and instructions 212.

The CPU and other processors of the processing module 202 may or may not operate in parallel, and may include ASICs, controllers and other types of hardware circuitry. By way of example, the graphical information may be generated by the graphics processors 206, while CPU 204 manages overall operation of the user device 100. The system is configured to receive information from a user through user inputs of user interface module 214 and to present information to the user via display module 216 including a display interface. User interface module 214 may receive commands and other information from a user via the user inputs and convert them for submission to a given processor(s). The user interface module 214, in conjunction with the processors of the processing module, is also configured to generate user interface 106 and to provide the necessary information to the display module 216. The display interface of the display interface 216 may comprise appropriate circuitry for driving the corresponding display device to present graphical and other information to the user.

Memory module 208 can be implemented as one or more of a computer-readable medium or media, a volatile memory unit or units, or a non-volatile memory unit or units. The memory module 208 may include, for example, flash memory and/or NVRAM, and may be embodied as a hard-drive or memory card. Alternatively the memory module 208 may also include DVD, CD-ROM, write-capable, and read-only memories. In one implementation, a computer program product is tangibly embodied in an information carrier. The computer program product contains instructions, such as the instructions 212 that, when executed by one or more processors, perform one or more methods or operations such as those described herein. Although Fig. 2 functionally illustrates the processor(s), memory module, and other elements of the user device as being within the same overall block, such components may or may not be stored within the same physical housing.

The data 210 may be retrieved, stored or modified by the processors in accordance with the instructions 212. The data may also be formatted in any computing device-readable format. The instructions 212 may be any set of instructions to be executed directly (such as machine code) or indirectly (such as scripts) by the processor(s). For example, the instructions may be stored as computing device code. In that regard, the terms "instructions" and "programs" may be used interchangeably herein. The instructions may be stored in object code format for direct processing by the processor(s), or in any other computing device language including scripts or collections of independent source code modules that are interpreted on demand or compiled in advance. Functions, methods and routines of the instructions in accordance with the dynamic user interface are explained in more detail below.

The user inputs of the user interface module 214 may include a touch screen element such as a capacitive or resistive touch screen, as well as physical input buttons, keys, switches, dials, slides, a microphone, a mouse, a pen input, trackball, etc. In addition to visual feedback via the display devices, the system may audio and/or sensory (e.g., tactile) feedback.

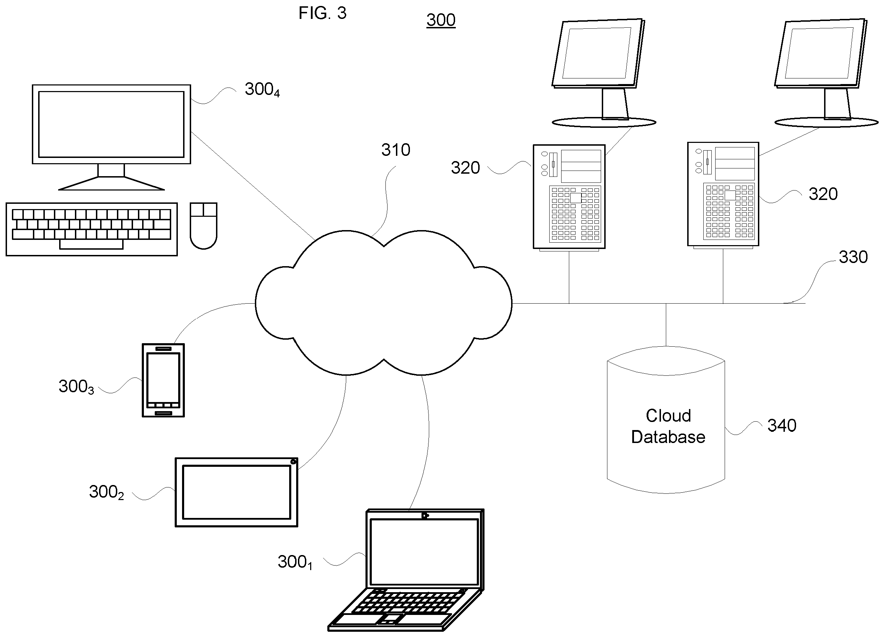

As also shown in Fig. 2, the user device also includes a communication module 218 for communicating with other devices and systems. The communication module 218 may include one or both of a wireless transceiver and a wired transceiver (not shown), which may provide a network connection. The user device may communicate with other remote devices, which is seen in illustration 300 of Fig. 3. By way of example, various user devices 300₁, 300₂, 300₃, and 300₄ may be connected to one or more servers 320 via network 310. The client devices 300 may obtain content such as music, images, videos, messages from a network database such as cloud database 340, which is coupled to one or more servers via a bus or other arrangement 330.

Returning to Fig. 2, the communication module 218 may communicate with other devices and networks using various configurations and protocols, including short range communication protocols such as near-field communication (NFC), WiFi, Bluetooth, Bluetooth LE. The networks may be any kind of network including the Internet, intranets, virtual private networks, wide area networks (WANs), local area networks (LANs), private networks, and various combinations of the foregoing.

In addition, the user device as shown includes one or more position and orientation sensors 220. The position and orientation sensors 220 are configured to determine the position and orientation of user device 100. For example, these components may include a GPS receiver to determine the device's latitude, longitude and/or altitude as well as an accelerometer, gyroscope or another direction/speed detection device. The client device 100 also includes one or more camera(s) 222 for capturing still images and recording video streams, speaker(s) 224 and a power module 226.

Position and orientation information from the sensors 220 may be used to adjust the size, position and/or appearance of a displayed UI. For instance, if the display device is rotated from a landscape position to a portrait position, the displayed UI may expand (or shrink) in the vertical direction. In turn, this may change the configuration of notifications and/or settings on the UI.

### EXAMPLE METHODS AND USE CASES

As noted above, features of the technology can be implemented in a variety of use cases. Examples of such user cases and other scenarios are discussed below and with reference to the accompanying figures.

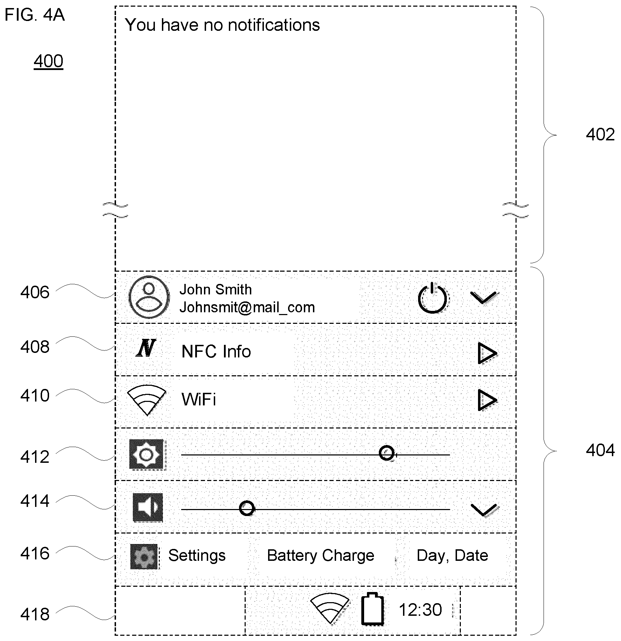

A first use case is presented in Figs. 4A-C, which shows how the introduction of user notifications can change the size, position, and so forth of settings and other information on the UI. Turning first to Fig. 4A, this figure illustrates a shared region 400 of the display (for instance a sidebar), which includes a user notifications area 402 and an application settings area 404. The user notifications area 402, as indicated by the wavy double lines, may have a variable length. This length may depend on the number of notifications being presented, the size of the notification, the appearance of the notifications, the available size of the display screen, or any combination of these factors. When there are no notifications, the user notifications area 402 may be set to a default size relative to the shared region 400. By way of example, the default size of the user notification area 402 may be equivalent to or otherwise no greater than the size of application settings area 404. As shown in Fig. 4A, the user notifications area 402 may visually indicate to the user that there are no notifications, for instance by stating "You have no notifications", by an icon, shading of the area or the like.

The application settings area 404 may also be of variable size as shown in subsequent figures. In Fig. 4A, the application settings area 404 is visually broken out into or otherwise delineated in a number of rows for different settings and features. By way of example, the application settings area 404 includes a user account setting 406, a near field communication setting 408, a WiFi communication setting 410, a display setting 412, a sound setting 414, a general setting and information section 416, and a quick information section 418. More or fewer features and settings may also be provided in the application settings area 404. Each of the settings and features may be selected, modified or otherwise acted upon by the user, as discussed in further detail below. Furthermore, while the settings and features are shown arranged in a particular order, this order may be changed based on various criteria, including how recently a setting was accessed, a setting priority, user preferences, etc.

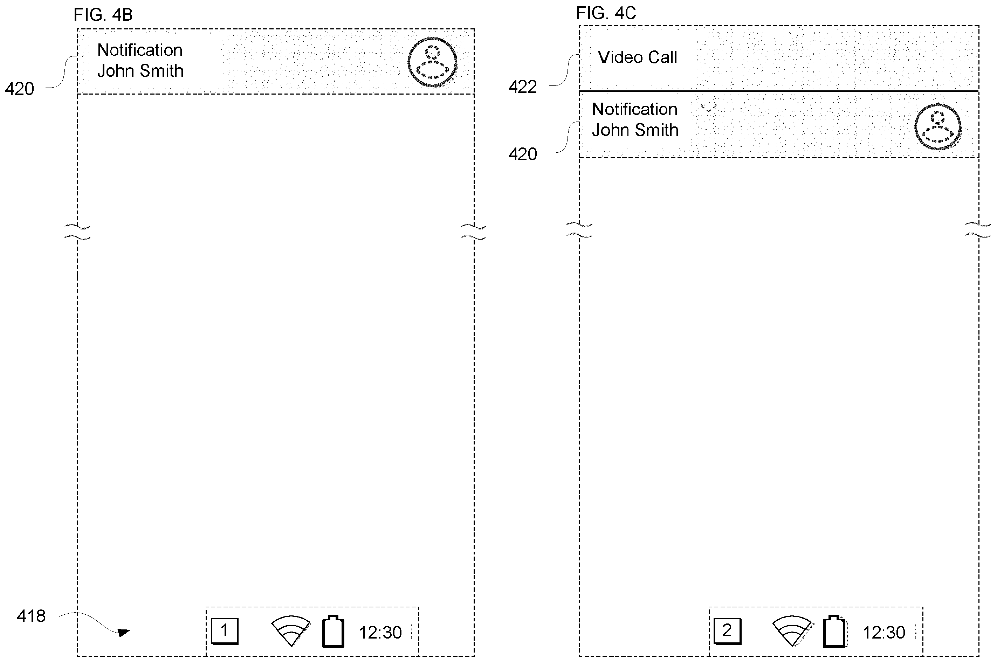

In this example use case, upon the occurrence of an action or event that satisfies some criterion, the processing system creates a notification in response to the criterion, which is presented in the user notifications area 402. This is shown in Fig. 4B, where notification 420 is provided along an upper section of the user notifications area 402. Similarly, as shown in Fig. 4C, when another action or event triggers creation of a notification, that new notification 422 is added to the user notifications area 402.

The various notifications may be arranged along the display area according to how new (or old) each notification is, the priority of each notification, the type of application or program associated with the notifications, and combinations of these and other criteria. For instance, the freshest or most recent notification may be provided at the top of the sidebar or other display area. The type of application may include emails, audio or video calls, texting apps, social media platforms, calendars, music players, video players, etc. Each type of application or individual application may be assigned a priority or other ranking that is used to identify the relative placement of a notification associated with that respective application. In the example of Fig. 4C, the notification 420 may be for an email account, while the notification 422 may be for a video call. In this example, the notification 422 for the video call may be placed at the top of the notifications list because it is fresher or because the video call has a higher priority than an email notification.

In this use case, when the notification 420 first occurs, as shown in Fig. 4B the application settings area 404 may be minimized to only show the quick information section 418, which may include basic information about WiFi or cellular signal strength, battery life and the current time. Here, the quick information section 418 may also identify the number of notifications, as shown by the "1" indicator in Fig. 4B, and the "2" indicator in Fig. 4C.

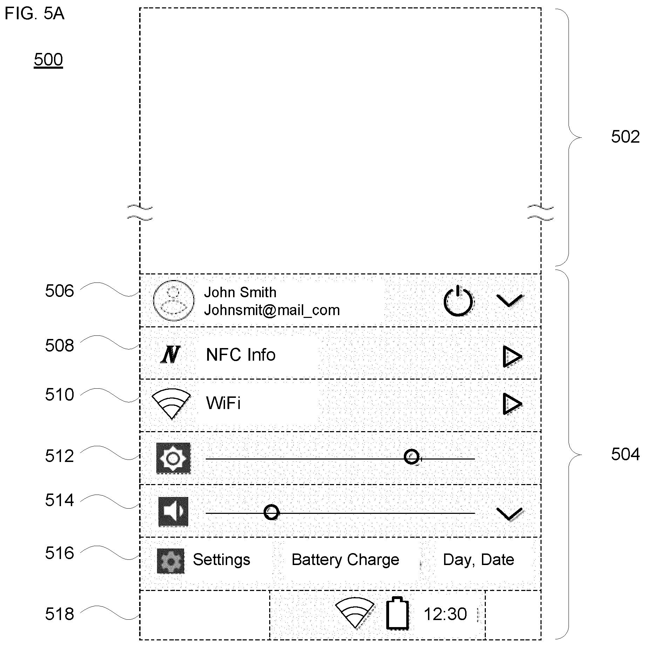

A second use case is shown in Figs. 5A-C, which illustrates how the introduction of a notification consolidates the application settings area into core settings information. Turning first to Fig. 5A, similar to Fig. 4A this figure illustrates a shared region 500 of the display (for instance a right or left rail sidebar), which includes user notifications area 502 and application settings area 504. For ease of readability, reference numerals similar to those in the first use case are used here. Thus, the application settings area 504 includes a user account setting 506, a near field communication setting 508, a WiFi communication setting 510, a display setting 512, a sound setting 514, a general setting and information section 516, and a quick information section 518.

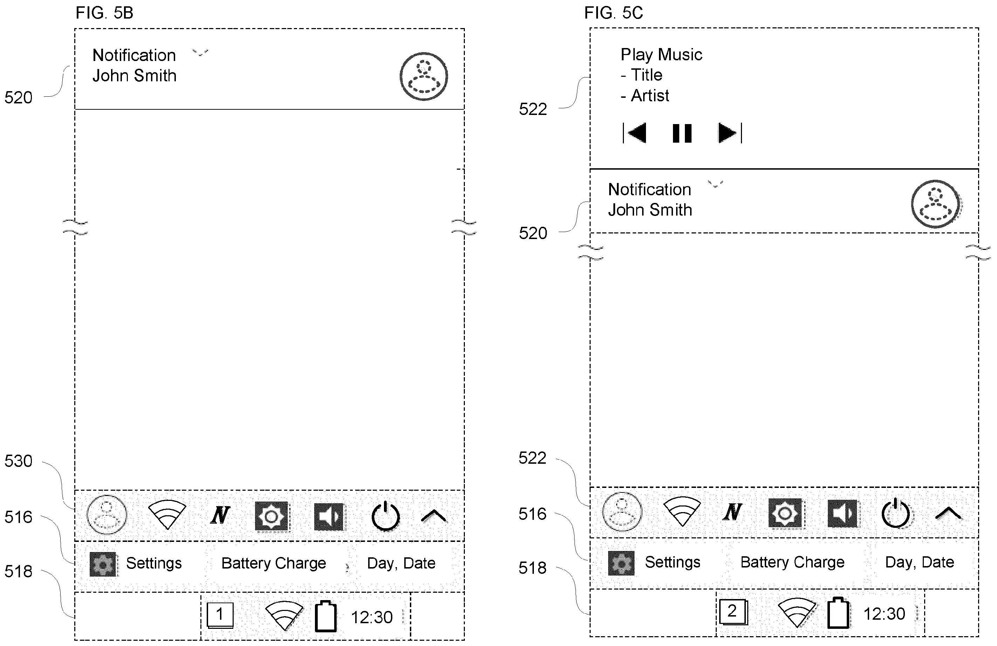

And as can be seen, in Fig. 5B, when a new notification 520 is displayed, the application settings area 504 is partially collapsed into a set of consolidated core settings 530. The core settings 530 may only include icons for certain settings, such as user account, WiFi, NFC, display, sound and power settings. As noted above, the arrangement of the settings may vary depending on various criteria. And as shown in Fig. 5C, when another action or event triggers creation of a notification, new notification 522 is added to the user notifications area 502. As shown in this example, the new notification 522 may be for an audio program such as a music player.

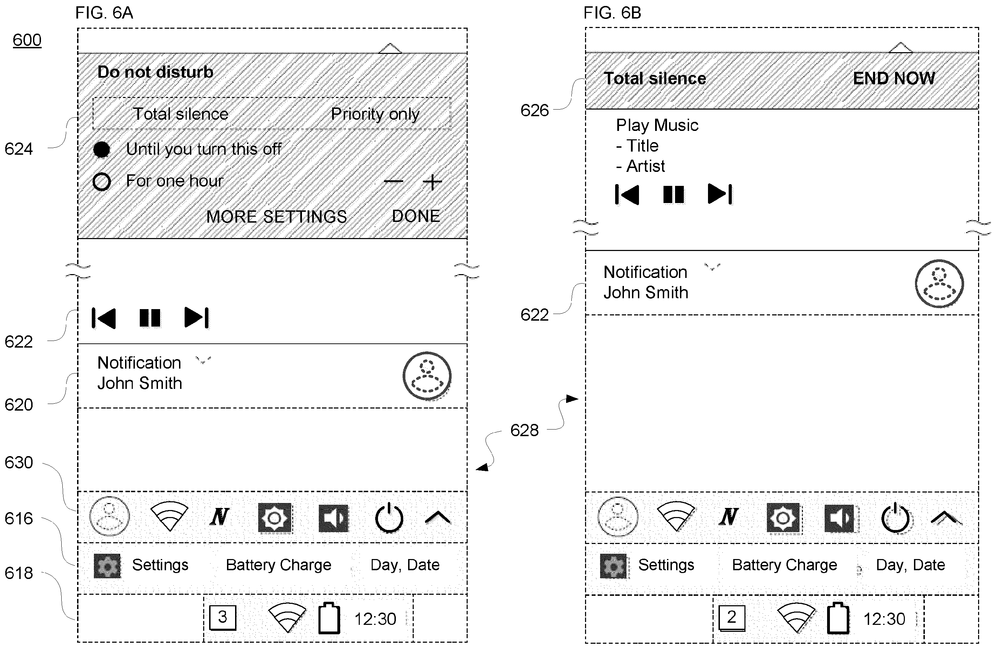

A third use case is shown in Figs. 6A-B, which involves "do not disturb" operation. Turning first to Fig. 6A, shared region 600 of the display includes multiple notifications 620, 622 and 624, as well as various account settings 616, 618 and 630 similar to those described above in the earlier use cases. In this case, the UI provides a do not disturb mode as seen by notification 624. The do not disturb mode can prevent certain reminders or other information being presented to the user via, e.g., audible, visual and/or vibratory alerts. In this portion of the user notifications area, the do not disturb mode gives the user various options to not receive reminders or indications about some or all of the notifications. As shown, the user may select for this feature to be active until the user turns it off or for a selected period of time. The selected period of time may be changes by the "-" and "+" buttons.

In addition, the user may select between different quiet levels. For instance, the user may select either a "total silence mode" or a "priority only" mode. In the total silence mode 626 (see Fig. 6B), while the notifications may be presented visually on the display, none of the notifications provides any audible sounds or other alerts to the user. In the priority only mode, only selected notifications are silenced. It can be seen from the difference between the general "do not disturb" mode notification 624 and the "total silence" mode 626, that the size and appearance of these notifications may differ. As a result, the relative size of the user notifications area may change as well. This may result in other notifications - such as older or lower priority notifications - being presented lower in the user notifications area. Alternatively, there may be a gap region 628 between the user notification area and the application settings area. This gap region 628 may vary in size depending on the number of notifications and/or settings currently presented on the UI.

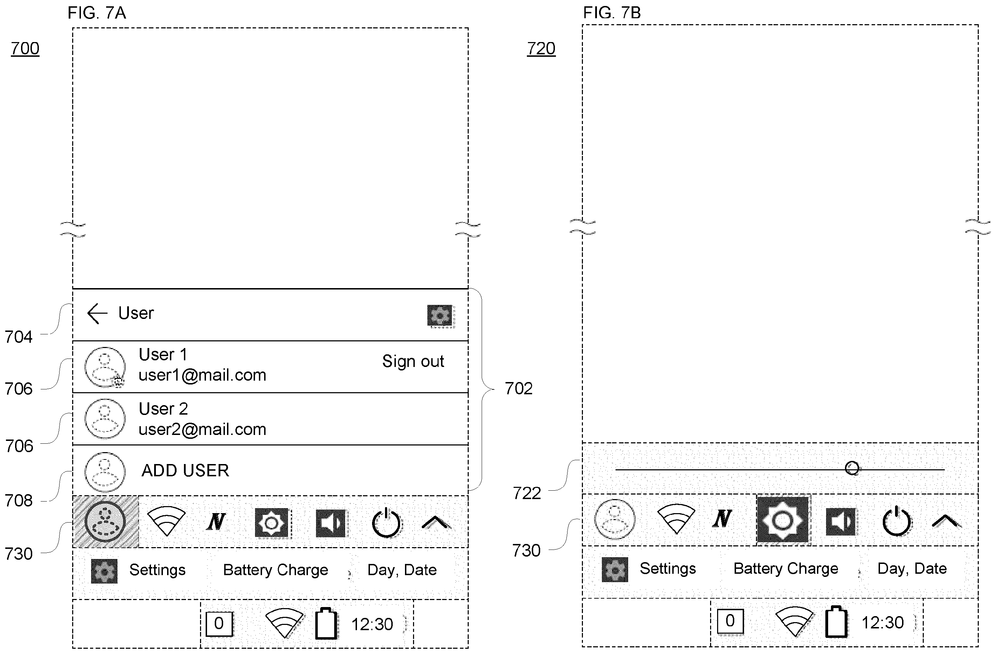

A number of UI configurations are shown in Figs. 7A-F. Starting in display region 700 of Fig. 7A, the user account setting 406 from Fig. 4A is seen as expanded into a full user setting panel 702. Here, this panel may include a user settings section 704, in which the user may select or modify certain aspects of the user settings. One or more users are listed in registered user sections 706. This allows for multiple users of the same device to easily log in and out of an application, which may be particularly useful in a classroom or training situation. A new user can be added via the new user section 708. Core settings 730 provides an indication of various settings that the user can quickly select and manage. Here, the user account setting icon is highlighted to show that this is the active setting.

Fig. 7B illustrates display region 720, in which the settings section includes brightness panel 722. The brightness panel 722 allows the user to easily change the brightness of the display device, for instance via a linear slider bar. In this example, the brightness setting icon of core settings 730 is highlighted to show that this is the active setting.

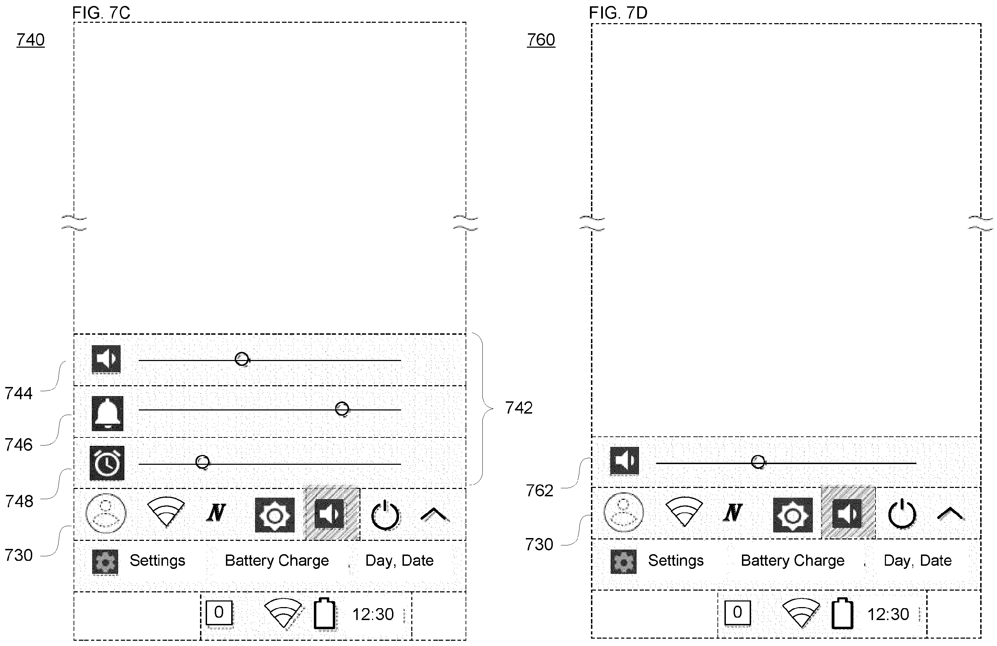

Fig. 7C illustrates display region 740, which includes an audio panel 742. The audio panel 742 includes, for instance, volume section 744, chime section 746, alarm section 748 and core settings 730. In the core settings, the audio icon is highlighted to indicate that the audio panel 742 is the active setting. Similarly, Fig. 7D illustrates display region 760, which includes an abbreviated volume panel 762. The abbreviated volume panel 762 may be used to control the volumes for sounds, chimes, alarms, etc. simultaneously. Or, alternatively, the abbreviated volume panel 762 may only adjust one type of volume.

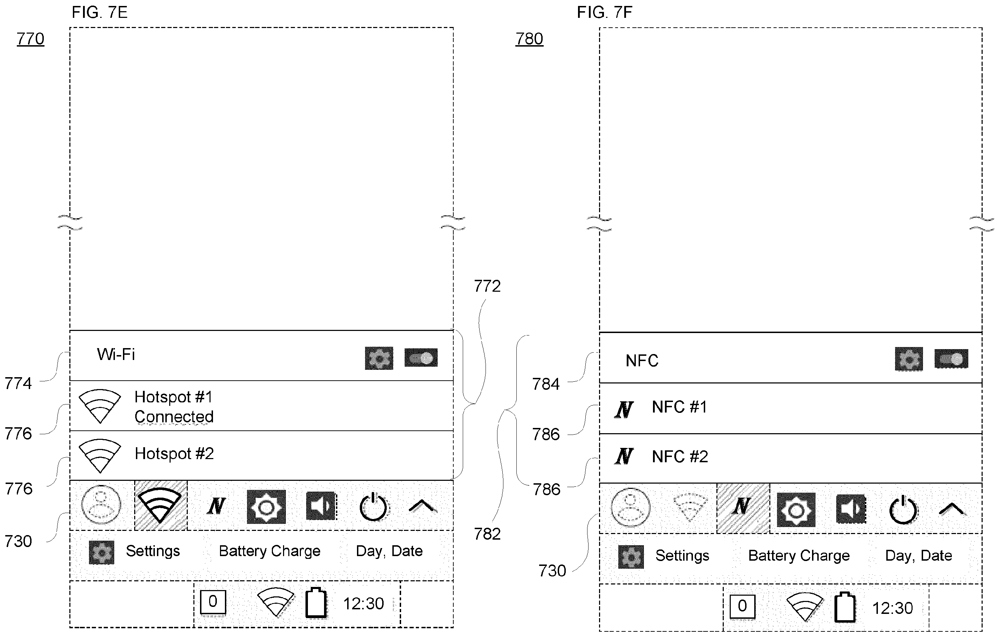

Fig. 7E illustrates display region 770, in which WiFi communication setting 410 of Fig. 4A is expanded into WiFi panel 772. The WiFi panel 772 includes WiFi settings section 774, in which the user may select or modify certain aspects of the WiFi settings, for instance searching for additional WiFi hot spots or removing a particular hotspot from the active list, or enabling or disabling the WiFi transceiver. One or more WiFi hotspots are listed in hotspot sections 776. The user may choose which hotspot to use by selecting one of the available options. Similar to the above, the WiFi icon in the core settings 730 is highlighted to show that the WiFi panel 772 is active.

Fig. 7F illustrates display region 780, in which near field communication setting 408 of Fig. 4A is expanded into NFC panel 782. The NFC panel 782 includes NFC settings section 784, in which the user may select or modify certain aspects of the NFC settings, for instance enabling or disabling NFC operation. One or more NFC links are listed in sections 786. The user may choose which NFC link to use by selecting one of the available options. Similar to the above, the NFC icon in the core settings 730 is highlighted to show that the NFC panel 782 is active.

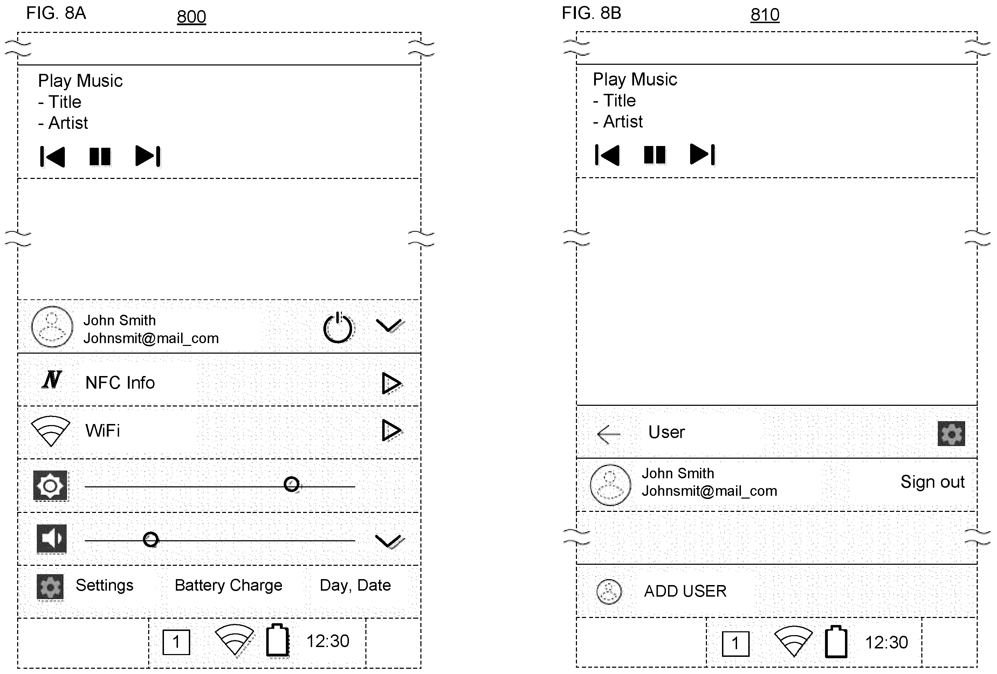

Figs. 8A-B present another use case, in which the UI transitions between one view 800 (Fig. 8A) with an expanded application settings area and another view 810 (Fig. 8B) with a condensed application settings area focusing on the user settings. The user notifications area may have one or more notifications, such as for a music application. Depending on the number of notifications, as discussed above there may be a gap region separating the notifications from the settings. As indicated by the wavy double lines, in Figs. 8A and 8B, the UI display region may have a variable length for both the user notifications area and the application settings area.

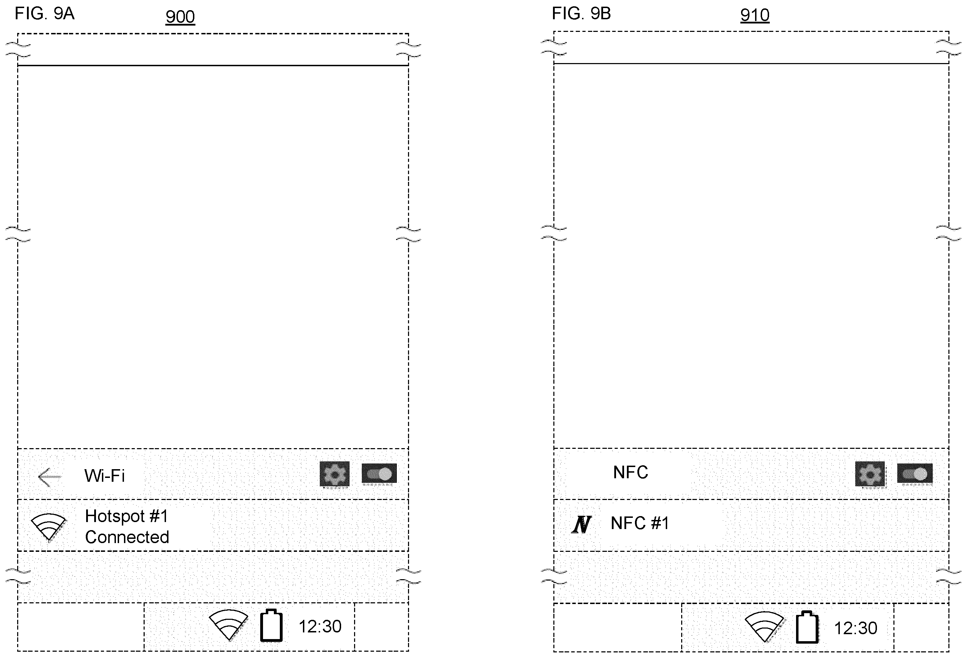

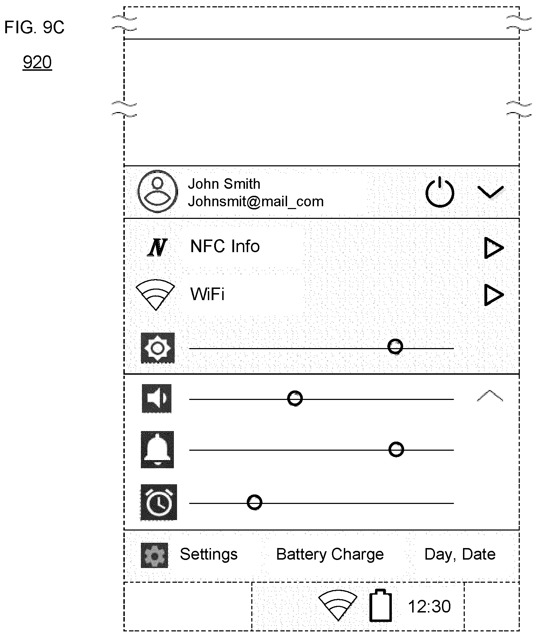

Figs. 9A-C present further examples of WiFi and NFC settings using respective views 900, 910 and 920. Figs. 9A and 9B illustrate settings information focusing separately on WiFi and NFC. Fig. 9C illustrates a variation in which the wireless communication settings for WiFi and NFC are provided along with the user account, display and full audio panel.

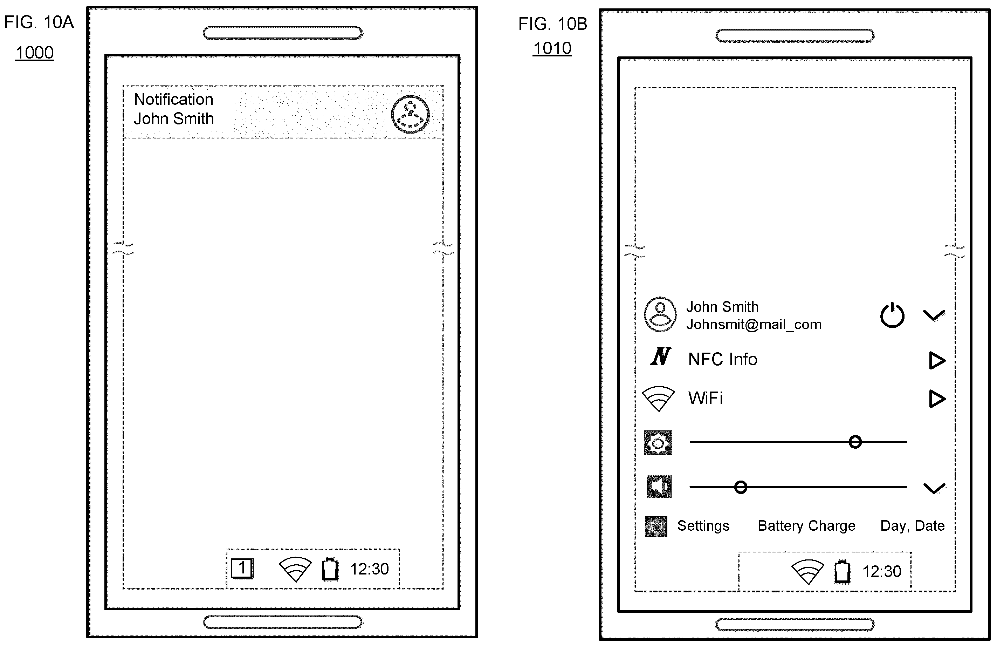

Figs. 10A-B illustrate two variations of how the application settings area may look on a UI for user device 100₂. For instance, in display 1000 of Fig. 10A, the application settings area is hidden aside from the quick information section positioned along a bottom region of the UI, while the notification is positioned along a top region of the UI. In display 1010 of Fig. 10B, an expanded application settings area is positioned along the lower area of the UI. As indicated by the wavy double lines, the overall UI may have a variable length. As noted above, the relative sizes of the application settings area and the user notifications area may change according to the nature/type of the notifications and/or settings displayed on the UI.

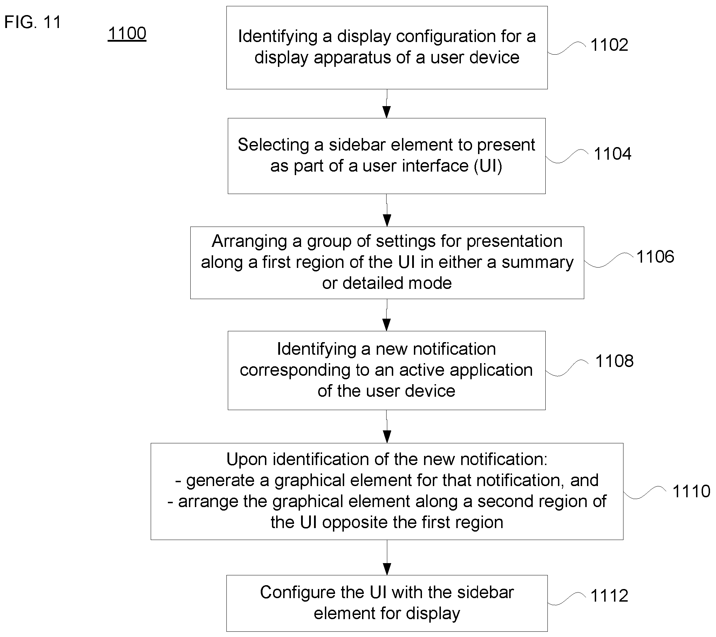

Finally, Fig. 11 is an example flow diagram 1100 of operational features of the technology described above, which may be performed by one or more processors, either alone or in conjunction with the user interface module, display interfaces and other components of the user device. As shown in block 1102, the process identifies a display configuration for a display apparatus of the user device. At block 1104, the process selects a sidebar or other graphical element to present as part of the UI. At block 1106, the process arranges a group of settings for presentation along a first region of the UI. The settings may be arranged in either a summary or detailed mode according to any of the examples and use cases illustrated in the figures and described herein. At block 1108, the system identifies whether a new

The logic and process flows depicted in the figures and described herein are not limited to a particular order or sequence unless expressly stated. In addition, other steps may be provided, or steps may be eliminated, from the described flows, and other components may be added to, or removed from, the described systems.

Although the technology herein has been described with reference to particular embodiments and scenarios, it is to be understood that these are merely illustrative of the principles and applications of the present technology.

## Claims

1. A method comprising:
presenting, by one or more processors, one or more user notifications (620, 622) in a first region (620, 622, 624; 622, 626) of a user interface on a display apparatus of a user device associated with a user; and
establishing, by the one or more processors, a do not disturb operation (624) for the one or more user notifications by:
presenting, by the one or more processors, a plurality of do not disturb options and corresponding settings to the user in the first region, wherein each one of the plurality of do not disturb options and corresponding settings are associated with the one or more user notifications;
receiving, by the one or more processors, user input associated with a selection of one of the plurality of do not disturb options and a corresponding setting, wherein the corresponding setting comprises a setting for a period of time in which the selected one of the plurality of do not disturb options remains active; and
suppressing, by the one or more processors, information associated with the one or more user notifications in accordance with the user input.

2. The method of claim 1, wherein one of the do not disturb options include a total silence option (626) that causes the information associated with all of the one or more user notifications to be presented visually without providing any audible sounds or other alerts to the user.

3. The method of claim 2, wherein the total silence option is activated for a period of time selectable by the user.

4. The method of claim 2, wherein the total silence option is activated until the do not disturb feature is deactivated.

5. The method of claim 1, wherein one of the one or more do not disturb options includes a priority only mode option that causes the information associated with selected ones of the one or more user notifications to be presented visually without providing any audible sounds or other alerts to the user.

6. The method of claim 1, wherein when the do not disturb operation is turned off, the information is presented in at least one of an audible form or a vibratory form.

7. The method of claim 1, wherein the information includes reminders or indications about the one or more user notifications.

8. The method of claim 1, wherein the size or appearance of the one or more user notifications and the do not disturb notification is variable.

9. The method of claim 1, further comprising:
presenting, by the one or more processors, a group of selectable settings for presentation in a second region (616, 618, 630) of the user interface, the second region being distinct from the first region; and
upon selection of a given setting in the group of selectable settings, expanding, by one or more processors, the given setting into a panel in the second region having a plurality of sections, and varying a size of the first region in accordance with the settings presented in the second region.

10. The method of claim 9, wherein one of the plurality of sections of the panel includes a selectable option for modifying the given setting.

11. The method of claim 9, wherein the first region and the second region are disposed along a sidebar element of the user interface.

12. The method of claim 11, wherein a gap region is disposed between the first region and the second region along the sidebar element of the user interface.

13. The method of claim 12, further comprising varying a size of the gap region based on a number of the user notifications.

14. A user device, comprising:
a display apparatus;
a user interface module configured to generate a user interface for presentation to a user on the display apparatus; and
one or more processors operatively coupled to the display apparatus and the user interface module, the one or more processors being configured to perform the method of any one of claims 1-13.

## Patentansprüche

1. Verfahren, umfassend:
Präsentieren, durch einen oder mehrere Prozessoren, einer oder mehrerer Benutzerbenachrichtigungen (620, 622) in einem ersten Bereich (620, 622, 624; 622, 626) einer Benutzerschnittstelle auf einer Anzeigeeinrichtung einer mit einem Benutzer verknüpften Benutzervorrichtung; und
Herstellen, durch den einen oder die mehreren Prozessoren, eines Nicht-stören-Betriebs (624) für die eine oder die mehreren Benutzerbenachrichtigungen durch:
Präsentieren, durch den einen oder die mehreren Prozessoren, einer Mehrzahl von Nicht-stören-Optionen und entsprechenden Einstellungen für den Benutzer in dem ersten Bereich, wobei jede von der Mehrzahl von Nicht-stören-Optionen und entsprechenden Einstellungen mit der einen oder den mehreren Benutzerbenachrichtigungen verknüpft ist;
Empfangen, durch den einen oder die mehreren Prozessoren, einer Benutzereingabe, die mit einer Auswahl einer von der Mehrzahl von Nicht-stören-Optionen und einer entsprechenden Einstellung verknüpft ist, wobei die entsprechende Einstellung eine Einstellung für einen Zeitraum umfasst, in dem die ausgewählte von der Mehrzahl von Nicht-stören-Optionen aktiv bleibt; und
Unterdrücken, durch den einen oder die mehreren Prozessoren, von Informationen, die mit der einen oder den mehreren Benutzerbenachrichtigungen verknüpft sind, gemäß der Benutzereingabe.

2. Verfahren nach Anspruch 1, wobei eine von den Nicht-stören-Optionen eine Völlige-Stille-Option (626) einschließt, die veranlasst, dass die Informationen, die mit allen von der einen oder den mehreren Benutzerbenachrichtigungen verknüpft sind, visuell präsentiert werden, ohne dem Benutzer jegliche hörbaren Töne oder anderen Warnungen bereitzustellen.

3. Verfahren nach Anspruch 2, wobei die Völlige-Stille-Option für einen durch den Benutzer auswählbaren Zeitraum aktiviert ist.

4. Verfahren nach Anspruch 2, wobei die Völlige-Stille-Option aktiviert ist, bis die Nicht-stören-Funktion deaktiviert wird.

5. Verfahren nach Anspruch 1, wobei eine von der einen oder den mehreren Nicht-stören-Optionen eine Option für einen Nur-Priorität-Modus einschließt, die veranlasst, dass die Informationen, die mit ausgewählten von der einen oder den mehreren Benutzerbenachrichtigungen verknüpft sind, visuell präsentiert werden, ohne dem Benutzer jegliche hörbaren Töne oder anderen Warnungen bereitzustellen.

6. Verfahren nach Anspruch 1, wobei, wenn der Nicht-stören-Betrieb ausgeschaltet ist, die Informationen in mindestens einer von einer hörbaren Form oder einer vibratorischen Form präsentiert werden.

7. Verfahren nach Anspruch 1, wobei die Informationen Erinnerungen oder Angaben zu der einen oder den mehreren Benutzerbenachrichtigungen einschließen.

8. Verfahren nach Anspruch 1, wobei die Größe oder das Erscheinungsbild der einen oder der mehreren Benutzerbenachrichtigungen und der Nicht-stören-Benachrichtigung variabel ist.

9. Verfahren nach Anspruch 1, ferner umfassend:
Präsentieren, durch den einen oder die mehreren Prozessoren, einer Gruppe auswählbarer Einstellungen zur Präsentation in einem zweiten Bereich (616, 618, 630) der Benutzerschnittstelle, wobei sich der zweite Bereich von dem ersten Bereich unterscheidet; und
bei Auswahl einer gegebenen Einstellung in der Gruppe auswählbarer Einstellungen, Erweitern, durch einen oder mehrere Prozessoren, der gegebenen Einstellung zu einem Panel in dem zweiten Bereich, das eine Mehrzahl von Teilabschnitten aufweist, und Variieren einer Größe des ersten Bereichs gemäß den in dem zweiten Bereich präsentierten Einstellungen.

10. Verfahren nach Anspruch 9, wobei einer von der Mehrzahl von Teilabschnitten des Panels eine auswählbare Option zum Modifizieren der gegebenen Einstellung einschließt.

11. Verfahren nach Anspruch 9, wobei der erste Bereich und der zweite Bereich entlang eines Seitenleistenelements der Benutzerschnittstelle angeordnet sind.

12. Verfahren nach Anspruch 11, wobei ein Zwischenraumbereich zwischen dem ersten Bereich und dem zweiten Bereich entlang des Seitenleistenelements der Benutzerschnittstelle angeordnet ist.

13. Verfahren nach Anspruch 12, ferner umfassend Variieren einer Größe des Zwischenraumbereichs basierend auf einer Anzahl der Benutzerbenachrichtigungen.

14. Benutzervorrichtung, umfassend:
eine Anzeigeeinrichtung;
ein Benutzerschnittstellenmodul, das konfiguriert ist, um eine Benutzerschnittstelle zur Präsentation für einen Benutzer auf der Anzeigeeinrichtung zu erzeugen; und
einen oder mehrere Prozessoren, die operativ mit der Anzeigeeinrichtung und dem Benutzerschnittstellenmodul gekoppelt sind, wobei der eine oder die mehreren Prozessoren konfiguriert sind, um das Verfahren nach einem der Ansprüche 1-13 durchzuführen.

## Revendications

1. Procédé comprenant :
la présentation, par un ou plusieurs processeurs, d'une ou de plusieurs notifications utilisateur (620, 622) dans une première région (620, 622, 624 ; 622, 626) d'une interface utilisateur sur un appareil d'affichage d'un dispositif utilisateur associé à un utilisateur ; et
l'établissement, par les un ou plusieurs processeurs, d'une opération « Ne pas déranger » (624) pour les une ou plusieurs notifications utilisateur par :
la présentation, par les un ou plusieurs processeurs, d'une pluralité d'options « Ne pas déranger » et de réglages correspondants à l'utilisateur dans la première région, dans lequel chacune de la pluralité d'options « Ne pas déranger » et chacun des réglages correspondants est associé aux une ou plusieurs notifications utilisateur ;
la réception, par les un ou plusieurs processeurs, d'une entrée utilisateur associée à une sélection d'une de la pluralité d'options « Ne pas déranger » et d'un réglage correspondant, dans lequel le réglage correspondant comprend un réglage pour une période de temps pendant laquelle l'option « Ne pas déranger » sélectionnée parmi la pluralité d'options « Ne pas déranger » reste active ; et
la suppression, par les un ou plusieurs processeurs, d'informations associées aux une ou plusieurs notifications utilisateur conformément à l'entrée utilisateur.

2. Procédé selon la revendication 1, dans lequel une des options « Ne pas déranger » comporte une option de silence total (626) qui permet de présenter visuellement les informations associées à l'ensemble des une ou plusieurs notifications utilisateur sans fournir de sons audibles ni d'autres alertes à l'utilisateur.

3. Procédé selon la revendication 2, dans lequel l'option de silence total est activée pendant une période de temps sélectionnable par l'utilisateur.

4. Procédé selon la revendication 2, dans lequel l'option de silence total est activée jusqu'à ce que la fonction « Ne pas déranger » soit désactivée.

5. Procédé selon la revendication 1, dans lequel une des une ou plusieurs options « Ne pas déranger » comporte une option de mode priorité uniquement qui permet de présenter visuellement les informations associées à des notifications utilisateur sélectionnées parmi les une ou plusieurs notifications utilisateur sans fournir de sons audibles ni d'autres alertes à l'utilisateur.

6. Procédé selon la revendication 1, dans lequel, lorsque l'opération « Ne pas déranger » est désactivée, les informations sont présentées sous au moins l'une d'une forme audible ou d'une forme vibratoire.

7. Procédé selon la revendication 1, dans lequel les informations comportent des rappels ou des indications concernant les une ou plusieurs notifications utilisateur.

8. Procédé selon la revendication 1, dans lequel la taille ou l'apparence des une ou plusieurs notifications utilisateur et de la notification « Ne pas déranger » est variable.

9. Procédé selon la revendication 1, comprenant en outre :
la présentation, par les un ou plusieurs processeurs, d'un groupe de réglages sélectionnables pour présentation dans une seconde région (616, 618, 630) de l'interface utilisateur, la seconde région étant distincte de la première région ; et
lors de la sélection d'un réglage donné dans le groupe de réglages sélectionnables, l'extension, par un ou plusieurs processeurs, du réglage donné dans un panneau de la seconde région ayant une pluralité de sections, et la variation d'une taille de la première région conformément aux réglages présentés dans la seconde région.

10. Procédé selon la revendication 9, dans lequel l'une de la pluralité de sections du panneau comporte une option sélectionnable pour modifier le réglage donné.

11. Procédé selon la revendication 9, dans lequel la première région et la seconde région sont disposées le long d'un élément de barre latérale de l'interface utilisateur.

12. Procédé selon la revendication 11, dans lequel une région d'espace est disposée entre la première région et la seconde région le long de l'élément de barre latérale de l'interface utilisateur.

13. Procédé selon la revendication 12, comprenant en outre la variation d'une taille de la région d'espace sur la base d'un nombre des notifications utilisateur.

14. Dispositif utilisateur, comprenant :
un appareil d'affichage ;
un module d'interface utilisateur configuré pour générer une interface utilisateur pour présentation à un utilisateur sur l'appareil d'affichage ; et
un ou plusieurs processeurs couplés de manière fonctionnelle à l'appareil d'affichage et au module d'interface utilisateur, les un ou plusieurs processeurs étant configurés pour réaliser le procédé selon l'une quelconque des revendications 1 à 13.
